# DEMANDE DE BREVET EUROPEEN

(11) **EP 0 644 036 A1**
(43) Date de publication de la demande: **22.03.1995**
(21) Numéro de dépôt: 94402026.2
(22) Date de dépôt: 12.09.1994
(51) Int. Cl.: B29C 53/06, B65D 81/127, F16L 59/02

(54) **Procédé de fabrication d'objets en polystyrene expansé et objets ainsi obtenus**

(30) Priorité: 16.09.1993 FR 9311034
(71) Demandeur: ISOBOX TECHNOLOGIES, F-92012 Nanterre Cédex (FR)
(72) Inventeur: Barbarit, André, F-94120 Fontenay-sous-Bois (FR)
(74) Mandataire: Orès, Bernard

(57) **Abrégé**

Procédé de fabrication d'objets en polystyrène expansé à partir de blocs ou plaques (10) de PSE rigides en raison de leur épaisseur, caractérisé en ce que lesdites plaques sont découpées dans leur épaisseur (E) pour ménager au voisinage d'une de leurs faces (11) de parement au moins un évidement (20) de faible épaisseur s'étendant sensiblement parallèlement à ladite face de parement et au moins une creusure (21) régnant entre ledit évidement (20) et l'autre face de parement sur laquelle elle débouche.

Figure 1A.

L'invention s'applique principalement aux domaines de l'isolation et de l'emballage.

## Description

L'invention concerne un procédé de fabrication d'objets en polystyrène expansé et les objets ainsi obtenus.

On sait que le polystyrène expansé est d'un emploi courant dans les domaines de l'emballage et de l'isolation et que, s'il est parfois mis en oeuvre sans être conformé il l'est le plus souvent, toutefois, après mise en forme par moulage, ce qui conduit à des produits finis d'excellente qualité mais exige, bien entendu, un investissement important en moules et outillages de fabrication. C'est pourquoi on fait appel, aussi bien dans le domaine de l'isolation que dans celui de l'emballage, au découpage et/ou à l'usinage de blocs ou de plaques en polystyrène expansé (PSE), le découpage à l'aide de fils chauffés, vibrants ou non, étant la solution préférée dans la mesure où elle permet d'obtenir une surface après découpage plus lisse que celle obtenue par enlèvement mécanique de matière. Ces techniques de travail des blocs ou plaques de PSE, de même que des techniques spécifiques de fabrication (comme le déroulage) permettent d'obtenir des feuilles de très faible épaisseur, relativement souples et qui peuvent de ce fait être déformées pour épouser des surfaces autres que planes. De telles feuilles minces ne peuvent pas, cependant, fournir les caractéristiques d'isolation ou de résistance aux chocs, -dans le domaine de l'emballage-, qui sont celles de plaques plus épaisses, par exemple de l'ordre de 50 mm, lesquelles sont rigides, indéformables et doivent nécessairement être moulées ou découpées à la configuration souhaitée pour leur utilisation.

Il se pose, dans ces conditions, le problème de pouvoir aisément façonner, à partir d'une plaque de PSE rigide en raison de son épaisseur et sans briser ladite plaque, un objet de forme générale cylindrique, -au sens le plus général de ce terme-, dont la section droite peut être une courbe ouverte ou fermée, de forme quelconque, y compris à partie(s) à faible(s) rayon(s) de courbure.

C'est, d'une façon générale, un but de l'invention de fournir une solution à ce problème.

C'est, à cet égard, un but de l'invention de fournir un procédé de fabrication d'objets en PSE à partir de blocs ou plaques de PSE relativement épais et rigides dont la mise en oeuvre puisse être effectuée à l'aide des outils habituels de travail du PSE.

C'est, encore, un but de l'invention de fournir un tel procédé dont la faisabilité industrielle est telle qu'il puisse être mis en oeuvre dans de bonnes conditions de rentabilité économique.

Un procédé selon l'invention, de fabrication d'objets en polystyrène expansé à partir de blocs ou plaques de PSE rigides en raison de leur épaisseur est caractérisé en ce que lesdites plaques, -préalablement obtenues le cas échéant à partir de blocs-, sont découpées dans leur épaisseur pour ménager au voisinage d'une de leurs faces de parement :
. au moins un évidement de faible épaisseur s'étendant sensiblement parallèlement à ladite face de parement ; et
. au moins une creusure régnant entre ledit évidement et l'autre face de parement sur laquelle elle débouche.

Les plaques découpées pour y ménager le ou les évidement(s) et creusure(s) présentent alors, au voisinage du ou des évidement(s), suffisamment de souplesse pour pouvoir être pliées en une, et de préférence plusieurs zones s'étendant parallèlement à la direction longitudinale des creusures, de sorte que lesdites plaques peuvent être mises en forme suivant des cylindres, -au sens général de ce terme-, dont la direction des génératrices est précisément celle du ou des axes de pliage.

En disposant à proximité les uns des autres plusieurs évidements et les creusures qui leur sont associées, il est possible d'accroître le nombre de "zones de pliage" et, de ce fait, de conformer la plaque de PSE, par ailleurs rigide, suivant un objet dont le contour présente un ou des rayon(s) de courbure relativement faible(s).

Compte-tenu de l'élasticité intrinsèque des bandes minces ménagées dans les plaques de PSE au voisinage des évidements, le pliage qui est fait desdites plaques après découpe ne peut être conservé qu'à l'aide de moyens auxiliaires et l'invention prévoit de maintenir la forme définitive des objets que l'on souhaite obtenir soit à l'aide d'organes analogues à des bandes de cerclage, comme des rubans adhésifs, soit en rapportant, -de préférence sur les faces en regard des creusures-, un adhésif rendu opératoire lorsque lesdites faces sont mises en contact, soit encore en prévoyant des formes complémentaires sur les faces en regard des creusures qui, lors du pliage, coopèrent entre elles, quelque peu à la façon d'un emboîtement, d'un embrèvement ou analogue.

Lorsque le procédé est mis en oeuvre à partir de blocs de PSE et non de plaques, de tels blocs sont d'abord découpés suivant des plaques dont les faces de parements peuvent être planes, bombées, ondulées, ... etc et cela par les techniques connues d'usinage et/ou à l'aide de fils chauffés qui provoquent la fusion de la matière lors de leur passage au travers desdits blocs.

D'autres caractéristiques et avantages de l'invention apparaîtront de la description qui suit, faite à titre d'exemple et en référence au dessin annexé dans lequel :
- la figure 1 est une vue schématique en perspective d'une plaque de polystyrène expansé avant mise en oeuvre du procédé de l'invention ;
- la figure 1A est une vue de la plaque de la figure 1 après découpe conformément au procédé selon l'invention ;
- la figure 2A est une vue partielle, en coupe, d'un objet fabriqué par le procédé de l'invention ;

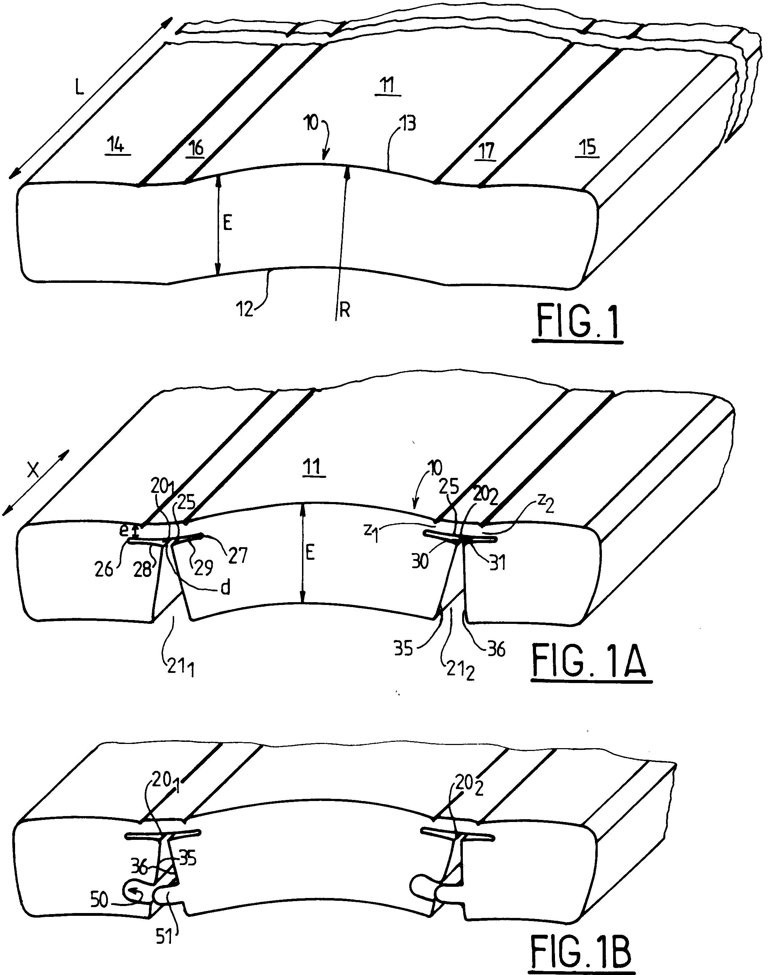

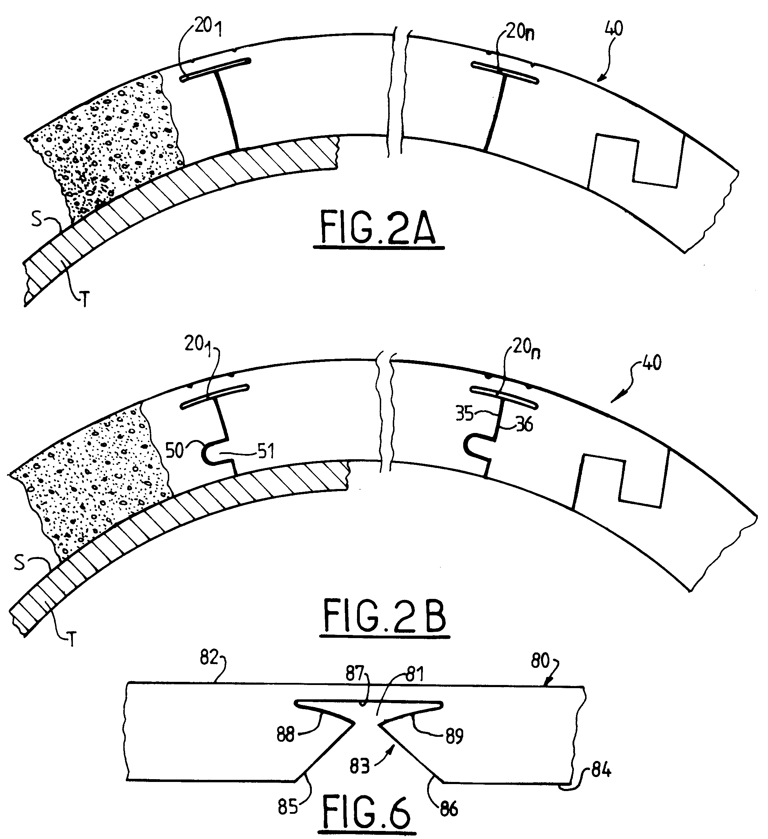

- les figures 1B et 2B sont des vues analogues à celles des figures 1A et 2A mais pour une variante de réalisation ;

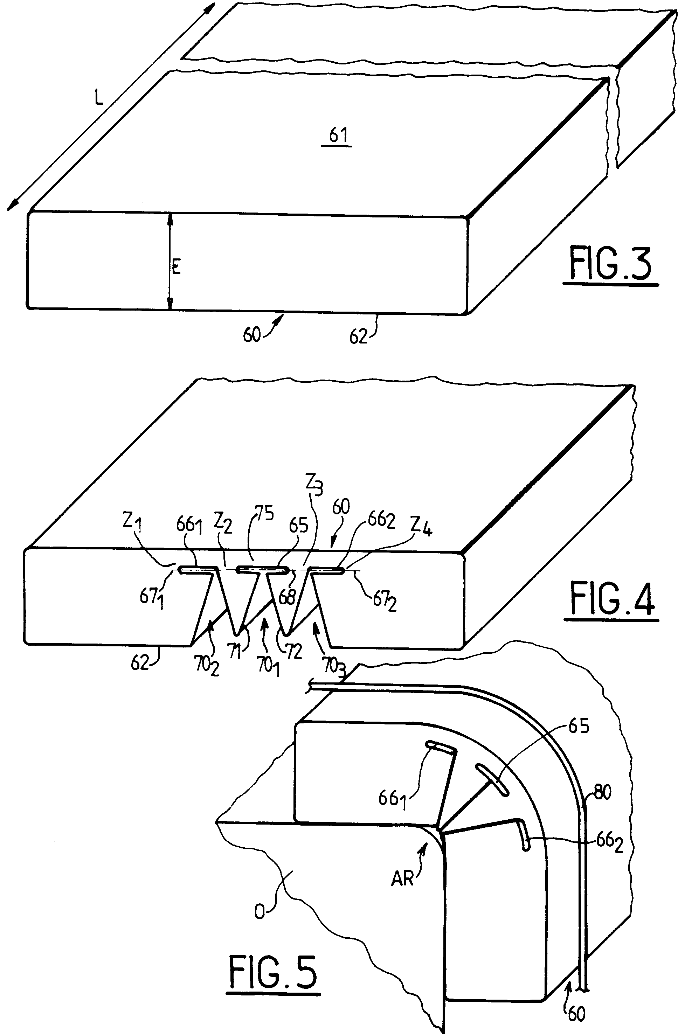

- la figure 3 est une vue analogue à celle de la figure 1 mais pour une autre réalisation ;
- la figure 4 est une vue analogue à celle de la figure 1A, mais pour la réalisation de la figure 3 ;
- la figure 5 est une vue schématique en perspective d'un objet obtenu à l'aide du procédé de l'invention ;
- la figure 6 est une vue schématique d'une découpe de plaque.

On se réfère d'abord aux figures 1 et 1A qui montrent schématiquement une plaque de polystyrène expansé, 10, dont l'épaisseur E est telle, par exemple de l'ordre de 50 mm, que ladite plaque limitée par des faces de parement parallèles 11 et 12 est rigide. Dans la réalisation décrite et représentée, les faces de parement sont à contour légèrement ondulé avec, pour la face de parement 11, une partie 13 à rayon de courbure R reliée à des parties adjacentes 14 et 15 de même rayon de courbure R par des méplats 16 et 17. Une telle plaque, dont la longueur L peut être de l'ordre de 1,20 m peut être fabriquée par moulage ou, de préférence, par découpe à l'aide de fils chauffés, vibrants ou non, dans des blocs de PSE de grande dimension.

Selon l'invention, la plaque 10 est découpée, de préférence à l'aide de fils chauffés, vibrants ou non, pour y ménager des évidements 20₁, 20₂ (figure 1A) au voisinage de la face de parement 11 et des creusures 21₁, 21₂ qui prennent naissance dans les évidements 20 et qui débouchent sur la face de parement 12. De façon plus précise, chaque évidement 20 s'étend sensiblement parallèlement à la face de parement à laquelle il est adjacent et présente en section droite un contour quelque peu en forme de "boutonnière", c'est-à-dire à bord rectiligne 25 relié à ses extrémités par des arrondis 26 et 27 à deux bords 28 et 29 sensiblement parallèles au bord 25 mais dont la longueur totale est inférieure à celle dudit bord de sorte qu'est ménagée, entre les extrémités 30 et 31 desdits bords 28 et 29, une discontinuité d qui est l'origine de la creusure 21₁ associée à l'évidement 20₁, creusure qui est limitée par des faces en regard 35 et 36 obliques par rapport à la direction des bords 25, 28 et 29.

La découpe de la plaque 10 suivant les évidements 20 et les creusures 21, -d'où la matière est retirée-, confère à ladite plaque, -plus précisément à la bande d'épaisseur e limitée par la face de parement 11 et le ou les évidements 20-, une certaine souplesse ou capacité de déformation par pliage autour de zones comme z₁, z₂ d'axe(s) parallèle(s) à la direction montrée en X sur la figure 1A et qui est celle de la longueur L de la plaque.

Pour mettre en forme une plaque découpée comme défini ci-dessus, par exemple pour constituer un revêtement isolant d'une surface cylindrique, l'invention prévoit de plier la plaque pour rapprocher et amener au contact les faces en regard des creusures 21 en tirant parti de la capacité de déformation de la bande de faible épaisseur e ; lorsque le pliage est terminé, les parties bombées 13, 14 et 15 de la plaque initiale forment alors avec les méplats 16 et 17 une surface sensiblement continue de rayon R, tant sur la face de parement 11 que sur la face d'intrados 12 au contact de la surface cylindrique à isoler.

Pour le maintien de la plaque dans la condition pliée, l'invention prévoit de garnir de colle, par exemple du type polyuréthanne, les faces en regard 35 et 36 des creusures avant de les rapprocher au contact l'une de l'autre.

En variante, le maintien de la forme donnée par pliage est obtenu en plaçant sur la face 12 un ou des rubans adhésifs.

Dans encore une autre variante, illustrée sur la figure 1B, le maintien dans la forme souhaitée d'une plaque pliée est obtenu en conformant les faces 35 et 36 pour que l'une d'elles, par exemple la face 35, soit découpée suivant une gorge 50 tandis que la face en regard 36 est découpée pour former une nervure 51 de section conjuguée de la gorge 50 et dans laquelle elle peut pénétrer, pour procurer un effet de coincement, étant entendu que l'action de blocage qui résulte de l'emboîtement de la nervure 51 dans la gorge 50 peut être complétée par l'un et/ou les deux des moyens précédemment mentionnés, à savoir l'utilisation d'adhésif sur les faces 35, 36 ou d'un ruban sur la face de parement 12.

Une plaque de polystyrène expansé rigide en raison de son épaisseur peut, à l'aide du procédé selon l'invention, être mise en forme pour constituer le revêtement isolant d'un tube T, y compris de diamètre relativement important, sur la surface externe S duquel il est rapporté. Pour ce faire, une plaque 10 de largeur correspondant à la circonférence du tube à garnir est découpée suivant une multiplicité d'évidements 20₁, ..., 20ₙ et de creusures correspondantes puis est pliée autour du tube T, les extrémités de la plaque étant solidarisées entre elles par l'emboîtement de gorges et nervures de formes conjuguées, comme montré dans la partie référencée 40 de la figure 2A (qui vise une réalisation à découpes selon la figure 1A) ou sur la figure 2B (qui vise une réalisation à découpes selon la figure 1B).

On se réfère maintenant aux figures 3 à 5 relatives à une autre forme de réalisation. Dans celle-ci, la plaque de départ 60 en PSE est une plaque plane rectangulaire d'épaisseur E (par exemple 50 mm comme la plaque 10 de la réalisation précédente) dont les faces de parement sont montrées en 61 et 62 et dont la longueur L, peut être de l'ordre de 1,20 m. Pour, à partir d'une telle plaque, réaliser un dispositif de calage destiné à être rapporté sur l'angle arrondi AR d'un produit O, figure 5, l'invention propose de découper la plaque, -de préférence ici aussi à l'aide de fils chauffés vibrants ou non-, comme montré sur la figure 4, c'est-à-dire suivant un évidement 65 de même forme que les évidements 20 de la réalisation précédente et deux évidements 66₁ et 66₂ d'envergure moitié de l'évidement 65, les plans moyens montrés en 67₁ et 67₂ des évidements 66 étant coplanaires au plan moyen 68 de l'évidement 65. Comme dans la réalisation des figures 1A et 1B, la découpe de la plaque 60 est également conduite pour former des creusures 70₁, 70₂, 70₃, issues des évidements 65, 66₁ et 662, respectivement, et qui débouchent sur la face de parement 62, chaque creusure étant à section droite sensiblement triangulaire et limitée, de ce fait, par des faces planes comme 71 et 72 pour la creusure 70₁.

L'utilisation d'une telle plaque découpée 60 est identique à celle des plaques 10 des réalisations précédentes. Par pliage de la plaque dans ses zones comme z₁, z₂, z₃, z₄ de la bande de faible épaisseur 75 régnant entre la face de parement 61 et les évidements 65 et 66, on amène au contact les unes des autres les faces planes en regard des creusures 70 jusqu'à donner à la plaque la forme montrée sur la figure 5. Pour le maintien de la plaque dans cette condition, l'invention propose, comme explicité ci-dessus, de revêtir d'adhésif les faces en regard comme 71 et 72 des creusures, avantageusement un adhésif du type polyuréthanne ou, en variante, de rapporter sur l'une des faces de parement, qui peut être la face 61, un ou des rubans adhésifs 80 qui "bloquent" le dispositif dans la forme qui lui a été impartie et qui correspond à l'angle arrondi AR du produit O à protéger. Un dispositif de calage du type de celui montré sur la figure 5 peut également être réalisé à l'aide d'une plaque 80, découpée comme montré sur la figure 6, c'est-à-dire pour ménager un évidement 81 s'étendant sensiblement parallèlement à la face de parement 82 et une creusure 83 règnant entre ledit évidement et l'autre face de parement 84, ladite creusure étant limitée par des faces 85 et 86, inclinées d'un angle voisin de 45° sur un plan médian de la creusure et qui sont reliées à la face 85 de l'évidement 81 qui est parallèle aux parements 82 et 84 par des surfaces arrondies 88 et 89, respectivement.

Un dispositif tel que celui décrit en référence aux figures 3 à 5 ou 6 peut, bien entendu, avoir d'autres applications que celui d'une cale d'emballage. C'est, ainsi, qu'il peut être utilisé pour constituer une partie d'un volume de forme générale cylindrique dont la direction des génératrices est parallèle à la direction de la longueur L de la plaque et dont la section droite est, par exemple, un rectangle à coins arrondis, ou une courbe ondulée, ou une courbe fermée quelconque.

## Revendications

1. Procédé de fabrication d'objets en polystyrène expansé à partir de blocs ou plaques (10, 60, 80) de PSE rigides en raison de leur épaisseur, caractérisé en ce que lesdites plaques, -préalablement obtenues le cas échéant à partir de blocs-, sont découpées dans leur épaisseur (E) pour ménager au voisinage d'une de leurs faces (11, 61, 82) de parement :
- au moins un évidement (20; 65; 66; 81) de faible épaisseur s'étendant sensiblement parallèlement à la dite face de parement ; et
- au moins une creusure (21, 70, 83) régnant entre ledit évidement (20, 65, 81) et l'autre face (12, 62, 84) de parement sur laquelle elle débouche.

2. Procédé selon la Revendication 1, caractérisé en ce que le ou les évidement(s) (20, 65, 66, 81) présentent en section droite un contour en forme de boutonnière dont les bords (25, 28, 29) sont parallèles à la face (11, 61, 82) de parement adjacente.

3. Procédé selon la Revendication 1 ou la Revendication 2, caractérisé en ce que la ou les creusure(s) (21, 70, 83) sont, avant pliage des plaques, à section droite sensiblement triangulaire.

4. Procédé selon l'une quelconque des Revendications précédentes, caractérisé en ce que le ou les évidement(s) (20, 65, 66, ..., 81) ménagés dans l'épaisseur (E) des plaques délimitent avec la face (11, 61, 82) de parement adjacente une ou plusieurs bandes de faible épaisseur (e) présentant suffisamment de souplesse pour pouvoir plier lesdites plaques en une ou plusieurs zones s'étendant parallèlement à la direction longitudinale de la ou des creusures (21, 70, 83) de sorte que lesdites plaques peuvent être mises en forme suivant des cylindres dont la direction des génératrices est celle du ou des axe(s) de pliage.

5. Procédé selon l'une quelconque des Revendications précédentes, caractérisé en ce que l'objet est maintenu à la forme qui lui a été donnée par pliage à l'aide de moyens auxiliaires comme des rubans adhésifs (80).

6. Procédé selon l'une quelconque des Revendications 1 à 4, caractérisé en ce que le maintien de l'objet à la forme qui lui a été donnée par pliage est obtenu en rapportant un adhésif sur les faces en regard (35, 36) des creusures (21, 70, 83).

7. Procédé selon l'une quelconque des Revendications 1 à 4, caractérisé en ce que la forme définitive de l'objet obtenu par pliage d'une plaque (10) est maintenue par emboîtement de gorge(s) et nervure(s) de formes conjuguées (50, 51) ménagées sur les faces en regard (35, 36) des creusures (21).

8. Objet en polystyrène expansé, comme un revêtement isolant, une cale d'emballage ... etc, obtenu par mise en oeuvre du procédé selon l'une quelconque des Revendications 1 à 7.
